# EUROPÄISCHE PATENTSCHRIFT

(11) **EP 4 507 220 B1**
(45) Veröffentlichungstag und Bekanntmachung des Hinweises auf die Patenterteilung: **25.03.2026**
(21) Anmeldenummer: 23190098.6
(22) Anmeldetag: 07.08.2023
(51) Int. Cl.: H04J 3/06, H02J 13/00, H04J 3/12

(54) **VERFAHREN ZUM VERMEIDEN VON FUNKTIONSBLOCKADEN INTELLIGENTER ELEKTRONISCHER EINHEITEN (IEDS)**
METHOD FOR PREVENTING FUNCTION BLOCKADE OF INTELLIGENT ELECTRONIC UNITS (IEDS)
PROCÉDÉ POUR ÉVITER LE BLOCAGE DE FONCTION D'UNITÉS ÉLECTRONIQUES INTELLIGENTES (IEDS)

(43) Veröffentlichungstag der Anmeldung: 12.02.2025
(73) Patentinhaber: Siemens Aktiengesellschaft, 80333 München (DE)
(72) Erfinder: GÖRBING, Andrej, 10318 Berlin (DE); CHEN, Ji, 211100 Nanjing (CN); FLEMMING, Stefan, 90574 Roßtal-Buchschwabach (DE); KOGAN, Igor, 10719 Berlin (DE); LINDNER, Oliver, 16244 Finowfurt (DE)
(74) Vertreter: Siemens Patent Attorneys

(56) Entgegenhaltungen:
- US-A1- 2014 281 037
- US-A1- 2018 109 369
- WHITEHEAD MICHAEL ET AL: "Validation Testing of IEC 61850 Process Bus Architecture in a Typical Digital Substation", 2021 74TH CONFERENCE FOR PROTECTIVE RELAY ENGINEERS (CPRE), IEEE, 22 March 2021 (2021-03-22), pages 1 - 9, XP033915260, DOI: 10.1109/CPRE48231.2021.9429718
- CHRISTOPH BRUNNER ET AL: "Smarter time sync: Applying the IEEE PC37.238 standard to power system applications", PROTECTIVE RELAY ENGINEERS, 2011 64TH ANNUAL CONFERENCE FOR, IEEE, 11 April 2011 (2011-04-11), pages 91 - 102, XP031972549, ISBN: 978-1-4577-0494-9, DOI: 10.1109/CPRE.2011.6035608
- "IEEE Standard Profile for Use of IEEE 1588 Precision Time Protocol in Power System Applications ; IEEE Std C37.238-2017 (Revision of IEEE Std C37.238-2011)", IEEE STANDARD, IEEE, PISCATAWAY, NJ USA, 17 June 2017 (2017-06-17), pages 1 - 42, XP068114900, ISBN: 978-1-5044-2326-7, [retrieved on 20170617], DOI: 10.1109/IEEESTD.2017.7953616
- CLOCK SUPPORT ERIC SPADA & YONG KIM: "Time Sync - Redundant Grandmaster Clock Support. ; ASbt-Spada-Kim-Fault-tolerant-grand-master-proposal-051", IEEE DRAFT; ASBT-SPADA-KIM-FAULT-TOLERANT-GRAND-MASTER-PROPOSAL-0513-V1, IEEE-SA, PISCATAWAY, NJ USA, vol. 802.1, no. v1, 14 May 2013 (2013-05-14), pages 1 - 10, XP068050436

## Beschreibung

Zur Synchronisation der Zeiteinstellung von Geräten, die unter Ausbildung eines Netzwerks über ein Kommunikationsnetz miteinander verbunden sind, wurde ein Zeitprotokoll eingeführt, das im Englischen Precision Time Protocol genannt und im Folgenden als PTP bezeichnet wird.

Ein lokal begrenztes Netzwerk ist beispielsweise in Umspannwerken der Elektroenergieversorgung realisiert. Solche Umspannwerke dienen zum Herab- beziehungsweise Heraufsetzen der im Versorgungsnetz herrschenden Netzspannungen mittels eines Transformators, dessen Wirkungsweise bekannt ist. Neben einem Transformator weisen Umspannwerke Schalteinheiten wie Leistungsschalter auf, die nach Erhalt eines Schaltsignals Leiterabgänge des Umspannwerks vom restlichen Versorgungsnetz abtrennen.

Die besagten Schaltsignale werden von Schutz- und Automatisierungsgeräten erzeugt, mit denen die Strom- und Spannungsverläufe in den Leitern des Umspannwerks auf das Vorliegen von Fehlerbedingungen hin überwacht werden. Liegt eine Fehlerbedingung vor, wird ein Schaltsignal erzeugt und an eine oder mehrere ausgewählte Schalteinheiten gesendet, so dass die Schalteinheiten in ihre Unterbrecherstellung überführt werden. In der Unterbrecherstellung sind die Kontakte der ausgewählten Schalteinheiten voneinander getrennt, so dass ein Stromfluss über die Schalteinheiten verhindert ist. Ein mit dem einen Kontakt der besagten Schalteinheit verbundener Leiterstrang ist dann von dem restlichen Versorgungsnetz, der mit dem anderen Kontakt der besagten Schalteinheit verbunden ist, abgetrennt.

Damit die Schutz- und Automatisierungsgeräte den Strom- und Spannungsverlauf in den Leitern des Umspannwerks auf das Vorliegen von Fehlerbedingungen hin überwachen können, müssen diese fortwährend mit zeitabhängigen Strom- und Spannungswerten versorgt werden. Zum Bereitstellen dieser Strom- und Spannungswerte sind Strom- und Spannungswandler vorgesehen, die an einer Messtelle des Umspannwerks Strom und Spannung in den Leitern erfassen und sekundärseitig ein geeichtes Messsignal bereitstellen, das mit einer festgelegten Abtastrate unter Gewinnung von Abtastwerten abgetastet wird. Die Abtastwerte werden anschließend digitalisiert. Ferner wird den Abtastwerten ein Zeitstempel fest zugeordnet. Dies erfolgt mittels so genannter "Merging Units" oder mit Hilfe von anderen intelligenten elektronischen Geräten (IEDs) des Umspannwerks. Um die Messwerte miteinander vergleichen zu können, muss die Zeiterfassung der IEDs, die über einen Prozessbus miteinander verbunden sind, synchronisiert werden. Hierzu dient das besagte PTP.

Das PTP wird also in digitalen Umspannwerken für die elektrische Energieversorgung zur Synchronisierung intelligenter elektronischer Geräte (IEDs) verwendet, beispielsweise im sogenannten IEC 61850 Prozessbus.

Die Vergleichbarkeit der Messwerte, die von unterschiedlichen IEDs stammen, ist von entscheidender Bedeutung. Eine verloren gegangene oder unzureichende zeitliche Synchronisation zwischen diesen Geräten führt zu einer Blockierung der Schutzfunktionen in den Schutz- und Automatisierungsgeräten oder zu einem fehlerhaften Auslösen einer Schalteinheit mit einer unbeabsichtigten Unterbrechung der Stromversorgung im Gefolge.

In einem digitalen Umspannwerk wird in der Regel eine digitale Prozessbus-Umgebung erzeugt. Zum Messen von Strom und Spannung in den Hochspannungsleitern dienen beispielsweise Strom- und Spannungswandler, die ausgangsseitig analoge Messwerte bereitstellen. Diese analogen Messwerte sind vom Schutzgerät auf der digitalen Seite durch ein spezielles Gerät getrennt, das vom Fachmann als Merging Unit (MU) bezeichnet wird. Eine Merging Unit stellt einen digitalen Strom von Abtastwerten zur Verfügung. Dieser Datenstrom weist Datentelegramme auf, die typischerweise der Norm IEC 61850-9-2 entsprechen. Das Schutzgerät, das im digitalen Netz die Rolle eines Datentelegramm-Empfängers, auf Englisch Sampled Value Subscriber (SV-SUB), einnimmt, meldet sich für eine Vielzahl von Datenströmen unterschiedlicher MUs an, wandelt die Datenströme durch digitale Filterung um, bewertet die Qualitäts- und Synchronisationsattribute der Daten und stellt die umgewandelten Daten den Schutz- oder sonstigen Funktionsalgorithmen zur Verfügung.

Ein Schutzgerät kann zusätzlich zu Datenströmen, die von Geräten im gleichen digitalen Netz übermittelt werden, andere digitale Datenströme empfangen, die beispielsweise von einer anderen weiter entfernten gelegene Unterstation stammen. Eine solche Vorgehensweise ist beispielsweise beim Leitungsdifferentialschutz erforderlich. Die Datenströme verschiedener Quellen können als Eingänge für Schutzgeräte nahezu frei kombiniert werden. Die Algorithmen der Schutzfunktionen stellen jedoch hohe Anforderungen an die Genauigkeit der Abtastsynchronisation an ihren Eingängen, da eine ungenaue Abtastung von analogen Messwerten zu einem Fehler der Schutzfunktion führen kann.

So überprüft beispielsweise ein Differentialschutz, dass die Summe der allseitig eines Schutzobjektes gemessenen Ströme im fehlerfreien Zustand gleich Null ist. Eine Fehlsynchronisation führt zu einer Phasendifferenz zwischen den gemessenen Datenströmen und so zu einem scheinbaren Differenzstrom. Dies kann zu einer Fehlauslösung führen. Auch bei einem Distanzschutz führt eine fehlerhafte Synchronisation der Messwerterfassung zwischen Strom und Spannung zu einer fehlerhaften Impedanz.

Bei Zweifeln an der Genauigkeit der Synchronisation der eingehenden Datenströme, wird die Funktion der IEDs blockiert. Bei Schutzgeräten geht beispielsweise ihre Schutzfunktion verloren. Generell kann eine Blockierung der Funktion von IEDs in Folge des Erkennens von Sprüngen der Synchronisationszeitbasis erfolgen. Auch die Überprüfung der Identität der Synchronisationsquelle kann zum gleichen Ergebnis führen.

Um die erforderliche Synchronisationsgenauigkeit zu gewährleisten, wird eine gemeinsame Synchronisationsquelle für alle beteiligten Geräte verwendet. Die in der IEC 61850-Norm beschriebene bevorzugte Synchronisationsmethode ist das IEEE 1588 Precision Time Protocol (PTP). Um die Schutzfunktionalität bei Ausfall der Synchronisationsquelle aufrechtzuerhalten, werden typischerweise mehrere redundante Synchronisationsquellen wie PTP Grandmaster Clocks (GMC) oder Grandmaster-Zeiteinheiten verwendet. Gemäß dem Protokoll IEEE 1588-sorgt eine so genannter Best Master Clock Algorithm (BMCA) dafür, dass eine der Zeitangabeeinheiten die Rolle des aktiven PTP-Grandmasters einnimmt und als Synchronisationsquelle dient. Diese Zeitangabeeinheit ist im Folgenden als Grandmaster-Zeitangabeeinheit bezeichnet. Die Auswahl der Grandmaster-Zeitangabeeinheit erfolgt dezentral auf der Grundlage der PTP-Datensatzeigenschaften innerhalb der Zeitangabeeinheit.

Die folgenden Schriften offenbaren als Stand der Technik die Synchronisation von IEDs:
WHITEHEAD MICHAEL ET AL: "Validation Testing of IEC 61850 Process Bus Architecture in a Typical Digital Substation", 2021 74TH CONFERENCE FOR PROTECTIVE RELAY ENGINEERS (CPRE), IEEE, 22. März 2021 (2021-03-22), Seiten 1-9, XP033915260, DOI: 10.1109/CPRE48231.2021.9429718.
CHRISTOPH BRUNNER ET AL: "Smarter time sync: Applying the IEEE PC37.238 standard to power system applications", PROTECTIVE RELAY ENGINEERS, 2011 64TH ANNUAL CONFERENCE FOR, IEEE, 11. April 2011 (2011-04-11), Seiten 91-102, XP031972549, DOI: 10.1109/CPRE.2011.6035608.

Die Blockierung der Funktion von IED ist unerwünscht und sollte daher nach Möglichkeit vermieden werden.

Aufgabe der Erfindung ist es daher, ein Verfahren der eingangs genannten Art anzugeben, bei dem ein Blockieren der Funktion von IEDs im Auftreten reduziert oder sogar vollständig vermieden werden kann.

Diese Aufgabe wird erfindungsgemäß durch die Merkmale der Patentansprüche 1 und 12 gelöst.

Varianten dieser Erfindung sind Gegenstand der abhängigen Patentansprüche.

Im Rahmen der Erfindung wurde erkannt, dass eine Blockade der Funktion bei einem Wechsel der Synchronisationsquelle unnötig sein kann. Dies ist dann der Fall, wenn die Grandmasterrolle zwischen Zeitangabeeinheiten wechselt, die miteinander synchronisiert sind.

Die vorliegende Erfindung schlägt Verfahren zum Vermeiden von Funktionsblockaden intelligenter elektronischer Einheiten IEDs vor, die als Teil eines lokalen Netzwerks und über das lokal begrenzte Netzwerk miteinander verbunden sind. Das lokal begrenzte Netzwerk verfügt über mehrere und daher über wenigstens zwei Zeitangabeeinheiten. Eine dieser Zeitangabeeinheiten dient als Synchronisationsquelle und nimmt eine aktive Grandmaster-Rolle ein. Alle anderen Zeitangabeeinheiten verbleiben in ihrem Slave-Zustand und synchronisieren sich mit der Zeitangabeeinheit in der Grandmaster-Rolle. Wenn eine der Zeitangabeeinheiten im Slave-Zustand in die Rolle der Grandmaster-Zeitangabeeinheit wechselt, wird eine Vorsynchronisationsmeldung an alle IEDs des lokalen Netzwerks gesendet. Die Vorsynchronisationsmeldung teilt den IEDs mit, ob und gegebenenfalls mit welcher vorherigen Grandmaster-Zeitangabeeinheit die aktuelle Grandmaster-Zeitangabeeinheit synchronisiert war. Wenn die IEDs also mit Datenströmen umgehen, die mit der vorherigen Synchronisationsquelle oder der aktuellen Synchronisationsquelle synchronisiert sind, kann eine Blockade der Funktion der IEDs entfallen, da diese Daten, obwohl mit Zeitstempeln von unterschiedlichen Quellen versehen, miteinander synchronisiert sind. Im Rahmen der Erfindung lassen sich daher Blockaden der Funktion von IEDs vermeiden.

Die Erfindung betrifft ferner eine Anordnung zum Vermeiden von Funktionsblockaden intelligenter elektronischer Einheiten, IEDs, mit einem lokalen begrenzten Netzwerk, das die IEDs und wenigstens zwei Zeitangabeeinheiten sowie ein Kommunikationsnetz aufweist, über das die IEDs und die Zeitangabeeinheiten miteinander verbunden sind, wobei die Zeitangabeeinheiten dazu eingerichtet sind, dass sie eine Grandmasterrolle, in der sie als Synchronisationsquelle für die IEDs dienen, oder einen Slave-Zustand annehmen, in dem sie sich mit einer Zeitangabeeinheit in der Grandmaster-Rolle synchronisieren, wobei die Zeitangabeeinheiten so ausgestaltet sind, dass sie, wenn eine der Zeitangabeeinheiten im Slave-Zustand in die Rolle der Grandmaster-Zeitangabeeinheit wechselt, allen IEDs in dem lokalen Netzwerk über das Netzwerk über eine Vorsynchronisationsmeldung mitgeteilt, ob und gegebenenfalls mit welcher vorherigen Grandmaster-Zeitangabeeinheit die aktuelle Grandmaster-Zeitangabeeinheit synchronisiert war, so dass eine Blockade der Funktion der IEDs, die Datenströme verarbeiten, deren Abtastwerte synchron mit der vorherigen Grandmaster-Zeitangabeeinheit erfasst wurden, vermieden ist.

Eine Zeitangabeeinheit kann im Sinne der Erfindung grundsätzlich beliebig ausgeführt sein. Unter einer Zeitangabeeinheit ist im Sinne der Erfindung jede Einheit zu verstehen, die in der Lage ist, ein Zeitnormal zu erzeugen. Diese Einheit kann als ein separates Gerät vorliegen oder aber eine Komponente oder Bestandteil eines anderen Gerätes beispielsweise einer IED, insbesondere eines Schutz- oder Automatisierungsgerätes sein. Die Zeitangabeeinheit kann ihren eigenen Oszillator aufweisen. Ein solcher Oszillator verfügt beispielsweise über einen Quarzkristall, dessen Schwingungen in ein Zeitnormal umgewandelt werden. Oszillatoren sind dem Fachmann jedoch bekannt, so dass an dieser Stelle nicht weiter auf deren genaue Funktionsweise eingegangen zu werden braucht. Der in einer Zeitangabeeinheit verwendete Oszillator kann im Rahmen der Erfindung mit einem anderen Oszillator synchronisiert werden.

Vorteilhafterweise wird im Rahmen der Erfindung der BMCA im Netzwerk ausführt. Je nach Ergebnis dieser Prüfung wird eine Zeitangabeeinheit in die Grandmaster-Rolle wechseln oder im Slave-Zustand verbleiben.

Ist eine Zeitangabeeinheit fehlerhaft, stellt der BMCA dies fest und löst einen Wechsel der Grandmasterrolle aus. Vorteilhafterweise wird eine wiederhergestellte oder wieder angeschlossene grandmasterfähige Zeitangabeeinheit im Rahmen der Erfindung so lange in ihren Slave-Zustand gezwungen, bis ihr eigener interner Oszillator mit demjenigen der aktuellen PTP-Grandmaster-Zeitangabeeinheit, sofern diese vorhanden ist, synchronisiert ist. Erst anschließend wird ein Erzwingen des Slave-Zustandes aufgehoben. Der BMCA bestimmt dann, ob diese wiederhergestellte und synchronisierte Zeitangabeeeinheit die Grandmaster-Rolle übernimmt. Auch auf diese Weise ist ein Zeitsprung vermieden.

Das Erzwingen des Slave-Zustandes kann durch Einstellung der Priorität der besagten Zeitangabeeinheit erfolgen. Wird die Priorität einer grandmasterfähigen Zeitangabeeinheit auf beispielsweise 254 oder 255 eingestellt, so wird sie bei einer Überprüfung durch den BMCA in ihrem Slave-Zustand verbleiben. Diese Vorgehensweise kann zusätzlich zum Versenden einer Vorsynchronisationsmeldung im Rahmen der Erfindung erfolgen.

Unter einem lokal begrenzten Netzwerk, das im Englischen als "local area network" und kurz als "LAN" bezeichnet ist, ist im Sinne der Erfindung ein räumlich begrenztes Netzwerk zu verstehen. Das lokal begrenzte Netzwerk ist beispielsweise ein Netzwerk, das in der IEC Norm IEC 61850 definiert ist. Vorteilhafterweise weist das lokal begrenzte Netzwerk eine strukturierte Verkabelung auf. Gemäß einer bevorzugten Variante ist das Netzwerk ein Prozessbus-Kommunikationsnetzwerk. Das räumlich begrenzte Netzwerk umfasst intelligente elektronische Geräte (IEDs), die zum Beispiel über kabelgeführte Kommunikationsleitungen oder Funk, z.B. 5G-Funknetze, miteinander verbunden sind. Der Einsatz der Ethernet Technologie ist im Rahmen der Erfindung jedoch bevorzugt. Grundsätzlich sind aber auch andere lokal begrenzte Netzwerke im Rahmen der Erfindung möglich.

Unter der Abkürzung IED ist im Rahmen der Erfindung ein intelligentes elektronisches Gerät zu Verstehen. Das IED ist beispielsweise ein Schutz- oder Automatisierungsgerät, ein Relais oder ein Feldleitgerät, das beispielsweise im Bereich der Schutz- und Leittechnik in Umspannwerken verwendet wird. Oft wird ein IED auch als Prozessor-basierte Controller bezeichnet.

Unter einer Funktionsblockierung im Sinne der Erfindung ist zu verstehen, dass eine Funktion, für welche die IED ausgelegt ist, im Falle einer Blockierung so lange nicht ausgeführt wird, wie die Blockierung besteht. Ist die IED beispielsweise ein Schutzgerät, wird eine Schutzfunktion des Schutzgeräts blockiert. Eine solche Schutzfunktion umfasst einen Schutzalgorithmus des Schutzgeräts der in dem Schutzgerät zur Anwendung gelangt. Im Rahmen der Erfindung können auch alle Schutzfunktionen eines Schutzgeräts blockiert werden. Andere IEDs können eine andere Funktion haben oder einem anderen Zweck dienen. Im Falle der Blockierung der Funktion eines Automatisierungsgeräts, das ebenfalls ein IED im Sinne der Erfindung ist, können beispielsweise die vom Automatisierungsgerät ansonsten automatisch durchgeführten Tätigkeiten über die Dauer der Blockierung nicht in Gang gesetzt werden.

Vorteilhafterweise wird im Rahmen der Erfindung das PTP verwendet.

Gemäß einer weiteren zweckmäßigen Variante ist das lokal begrenzte Netzwerk ein Funknetz. Insbesondere entstehen Vorteile, wenn das Funknetz ein 5G-Funknetz ist.

Gemäß einer bevorzugten Ausgestaltung der Erfindung umfasst das lokal begrenzte Netzwerk ein Prozessbus-Kommunikationsnetzwerk eines Umspannwerkes. Im Prozessbus-Kommunikationsnetzwerk wird bevorzugt die Ethernet-Technologie eingesetzt.

Im Rahmen der Erfindung ist die Anzahl der Zeitangabeeinheiten nicht auf zwei Zeitangabeeinheiten begrenzt. So können in dem Netzwerk auch beispielsweise fünf oder mehr Zeitangabeeinheiten miteinander kommunizieren.

Zweckmäßigerweise ist wenigstens eine Zeitangabeeinheit in einem IED integriert oder mit anderen Worten verbaut. Sie ist also Bestandteil des IEDs und in dessen Gehäuse angeordnet.

Weitere Vorteile ergeben sich, wenn wenigstens ein IED ein Schutz- oder Automatisierungsgerät eines Elektroenergieversorgungsnetzes ist. Ferner kann eine MU ein IED im Sinne der Erfindung sein.

Bei einer Variante der Erfindung ist die Vorsynchronisationsmeldung eine binäre Vorsynchronisationsmeldung. Unter dem Begriff binäre Vorsynchronisationsmeldung ist zu verstehen, dass die Vorsynchronisationsmeldung in Gestalt einer binären Information Auskunft über den Vorsynchronisations-Zustand erteilt. Die binäre Vorsynchronisationsmeldung gibt nur an, ob die Vorsynchronisierung erfolgreich war. Die Identität der Synchronisationsquelle wird in diesem Falle nicht angegeben. Bei dieser einfachen und daher kostengünstigen Variante der Erfindung, wird davon ausgegangen, dass nur zwei Synchronisationsquellen (PTP-GMCs) im Netz vorhanden sind. Mit anderen Worten wird angegeben, ob die aktuelle Grandmaster-Zeitangabeeinheit mit der vorherigen Grandmaster-Zeitangabeeinheit synchronisiert war. Die binäre Vorsynchronisationsinformation führt, falls sie wahr ist, zu einer temporären Deaktivierung einer ansonsten vorgesehenen Überprüfung der Synchronisationsidentität. Ansonsten bleibt die Überprüfung der Synchronisationsidentität aktiv.

Auch auf diese Weise kann die Funktionsblockierung vermieden werden.

Grundsätzlich ist es im Rahmen der Erfindung beliebig, welche Einheit die Vorsynchronisationsmeldung an die IEDs des lokalen Netzwerks versendet. Vorteilhafterweise erfolgt dies jedoch durch eine IED oder Zeitangabeeinheit, die den Wechsel der Grandmasterrolle in Folge der Überprüfung der Synchronisationsidentität feststellen. Eine solche Zeiteinheit kann die Zeitangabeeinheit sein, die in die Rolle des Grandmasters gewechselt ist. Im Rahmen der Erfindung ist es jedoch auch möglich, dass das Versenden von einer anderen Zeitangabeeinheit erfolgt, die nicht in die Grandmasterrolle gewechselt ist. Weitere Vorteile entstehen, wenn die Zeitangabeeinheit die Vorsynchronisationsmeldung in dem Zeitpunkt absetzt, in dem diese in die Rolle der Grandmaster-Zeitangabeeinheit wechselt. Durch diese Variante wird eine Verzögerung beim Absetzen der Vorsynchronisationsmeldung vermieden.

Vorteilhafterweise umfasst die Vorsynchronisationsmeldung die Identität der aktuellen Grandmaster-Zeitangabeeinheit, die Identität der vorherigen Grandmaster-Zeitangabeeinheit und eine Angabe, aus der hervorgeht, ob die aktuelle Grandmaster-Zeitangabeeinheit und die vorherige Grandmaster-Zeitangabeeinheit miteinander synchronisiert waren. In diesem Fall kann eine erfolgreich vorsynchronisierte Synchronisationsquelle also mit anderen Worten die aktuelle Grandmaster-Zeitangabeeinheit ihre eigene Synchronisationsidentität und die Synchronisationsidentität der Synchronisationsquelle, mit der sie synchronisiert wurde, den IEDs mitteilen. Die IEDs können beide Werte verwenden, um die Synchronisationsidentität eingehender Datenströme zu überprüfen, da diese auf derselben Zeitbasis basieren. Die Blockierung der Schutzfunktion kann vermieden werden, wenn die von einer MU in Datentelegrammen jeweils übermittelte Grandmasteridentität einer der in der Vorsynchronisationsmeldung übermittelten Grandmaster-Identitäten entspricht und die Vorsynchronisation erfolgreich war.

Bei einer weiteren erfindungsgemäßen Variante wird jede Vorsynchronisationsmeldung als GOOSE-Meldung gesendet. GOOSE Meldungen sind dem Fachmann aus dem Standard IEC 61850-8-1 bekannt. GOOSE steht für generische objektorientierte Stationsereignismeldungen. GOOSE-Meldungen können von der Grandmaster-Zeitangabeeinheit, als MUs ausgeführte IEDs oder von Schutzgeräten mit eingebauter GMC-Funktion versendet werden.

Bei einer hiervon abgewandelten Variante wird jede Vorsynchronisationsmeldung von einer Grandmaster-Zeiteinheit versendet, wenn diese die Grandmasterrolle übernimmt, wobei diese als separate Einheit in das lokale Netzwerk eingebunden ist.

Hiervon abweichend kann im Rahmen der Erfindung vorgesehen sein, dass die aktuelle Grandmaster-Zeiteinheit ein Funktionsblock ist, der in einer IED integriert ist. Ist die Grandmaster-Zeiteinheit als Funktionsblock ausgeführt und als solcher in einer IED verbaut und ist sie ferner zum Versenden der Vorsynchronisationsmeldung vorgesehen, dann erfolgt die Übermittlung der Vorsynchronisationsmeldung bevorzugt in Gestalt einer GOOSE-Nachricht. Der GOOSE-Mechanismus wird typischerweise bereits für andere Zwecke von der IED eingesetzt, in welcher die besagte Grandmaster-Zeitangabeeinheit verbaut ist.

Gemäß einer diesbezüglich zweckmäßigen Weiterentwicklung umfasst die Vorsynchronisationsmeldung ein Typ-Länge-Wert-Feld Type-Length-Value (TLV). TLVs werden im oben beschriebenen PTP Protokoll verwendet und sind dem Fachmann in diesem Bereich bekannt. Weiterführende Ausführungen hierzu können also an dieser Stelle entfallen.

Vorteilhafterweise umfassen die IEDs mehrere Merging Units (MUs) und wenigstens ein Schutzgerät.

Die Vorsynchronisationsmeldung wird vorteilhafterweise nach einer vordefinierten Zeit ungültig.

Gemäß einer weiteren Variante wird eine erste Zeitangabeeinheit in ihren Slave-Zustand gezwungen, wenn eine andere Zeitangabeeinheit in der Grandmaster-Rolle in dem lokal begrenzten Netzwerk erkannt wurde, wobei sich die erste Zeiteinheit mit der Zeitangabeeinheit in der Grandmaster-Rolle synchronisiert, nach erfolgter Synchronisation das Erzwingen des Slave-Zustandes bei der ersten Zeitangabeeinheit aufgehoben wird, die erste Zeitangabeeinheit in die Rolle der Grandmaster-Zeitangabeeinheit wechselt, wenn diese sich besser für die Grandmaster-Rolle eignet, oder in ihrem Slave-Zustand verbleibt, wenn eine andere Zeitangabeeinheit in dem Netzwerk sich besser für die Grandmaster-Rolle eignet. Auch auf diese Weise kann das Blockieren der Funktion von IEDs vermieden werden, da die sich in der Grandmasterrolle abwechselnden Zeitangabeeinheiten immer miteinander synchronisiert sind.

Gemäß einer diesbezüglich zweckmäßigen Weiterentwicklung verbleibt eine wieder verfügbare oder wieder mit dem Netzwerk verbundene grandmasterfähige Zeitangabeeinheit im Slave-Zustand und synchronisierte sich fortlaufend mit der aktuellen Grandmaster-Zeitangabeeinheit. Erst bei Wegfall der Grandmaster-Zeitangabeeinheit wechselt sie in die Grandmaster-Rolle.

Das erfindungsgemäße Verfahren ist vorteilhafterweise ein computerimplementiertes Verfahren oder mit anderen Worten ein von einem Computer ausgeführtes Verfahren.

Die Erfindung wird nachfolgend anhand von Ausführungsbeispielen näher erläutert, wobei gleiche Bezugszeichen auf gleich wirkende Bauteile verweisen und wobei
- Figur 1: ein Ausführungsbeispiel eines Prozessbus-Kommunikationsnetzwerks,
- Figur 2: ein Ablaufdiagramm zur Verdeutlichung eines Ausführungsbeispiels des erfindungsgemäßen Verfahrens zeigen.

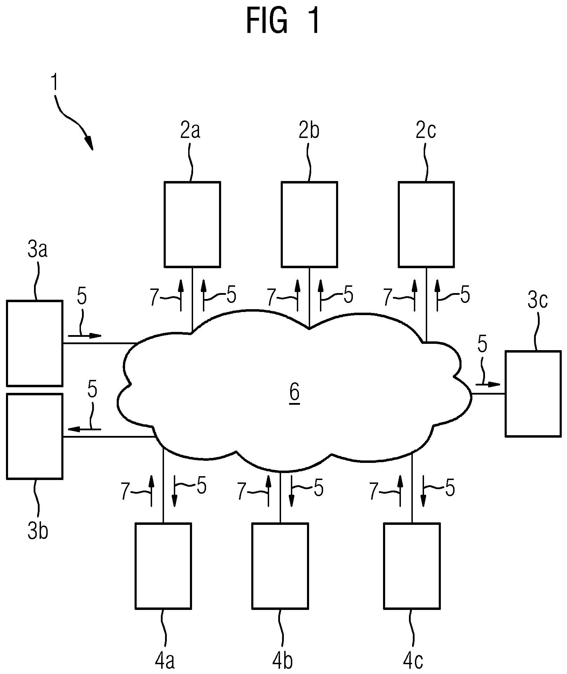

Figur 1 zeigt beispielhaft ein lokal begrenzts Netzwerk 1. Das Netzwerk 1 weist als IEDs Schutzgeräte 2a, 2b, und 2c auf. Die IEDs umfassen ferner so genannte Merging Units (MUs) 4a, 4b, und 4c. Zeitangabeeinheiten sind mit den Bezugszeichen 3a, 3b und 3c referenziert. Wie bereits weiter oben ausgeführt wurde sorgt ein BMCA dafür, dass die Zeitangabeeinheit 3a die Rolle des Grandmasters einnimmt. Die Zeitangabeeinheiten 3b und befinden sich im Slave-Zustand.

In dem dargestellten Ausführungsbeispiel können die Zeitangabeeinheiten 3a PTP-Synchronisationsnachrichten gemäß dem vorgegebenen Aufbau "Announce", "Sync" und "Follow_Up" über einen Kommunikations-Prozessbus 6 an die IEDs, also die Schutzgeräte 2a, 2, b und 2c und die MUs 4a, 4b und 4c senden, die ebenfalls an das Prozessbus-Kommunikationsnetzwerk 6 angeschlossen sind.

Die Zeitangabeeinheiten 3 können grundsätzlich mit einer primären Referenztaktquelle - der so genannten Primary Reference Clock (PRC) - verbunden sein, z.B. mit dem Global Navigation Satellitensystem (GNSS). Auf Grund ihrer Beeinflussbarkeit durch Störsender (Jamming) oder anderen Mitteln (z.B. Spoofing) stellen solche satellitengestützten globalen Referenztaktquellen jedoch ein Risiko dar und dürfen in Abhängigkeit ihres Einsatzgebietes oft nicht verwendet werden. In einem solchen Fall kann ein geräteinterner Oszillator verwendet werden, der in den Zeitangabeeinheiten 3 verbaut ist, wobei diese dann eine relative Zeitreferenz in Gestalt von Zeitwerten im Prozessbus-Kommunikationsnetzwerks 6 unabhängig von außen vorgeben.

Relative Zeitwerte, die von dem Lokaloszillator in den Zeitangabeeinheiten 2, 3 bereitgestellt werden, reichen bei einer Anwendung eines Prozessbus-Kommunikationsnetzwerks 6 in einem Umspannwerk eines Elektroenergieversorgungsnetzes zur Synchronisation aus, da keine absoluten Zeitwerte benötigt werden.

Die Verwendung von mehreren Zeitangabeeinheiten dient der Redundanz also Verfügbarkeitszwecken. Unter ausfallfreien Bedingungen wird eine einzige Zeitangabeeinheit 3a mit Hilfe des Best-Master-Clock-Algorithmus (BMCA) zum aktiven Grandmaster gewählt. Nur dieser sendet PTP-Synchronisationsnachrichten 5 über das Netzwerk 6. Die anderen Zeitangabeeinheit 3b und 3c senden keine PTP-Synchronisationsnachrichten und befindet sich im Slave-Zustand. Sie empfangen wie die IEDs 2 und 4 PTP-Synchronisierungsnachrichten 5 von der Grandmaster-Zeitangabeeinheit 3a und synchronisieren ihren eigenen internen Oszillator entsprechend dem Oszillator der Zeitangabeeinheit 3a, so dass der interne Oszillator der Zeitangabeeinheit 3b, 3c nahezu mit der gleichen Geschwindigkeit wie der interne Oszillator der Zeitangabeeinheit 3a oszilliert. Die Zeitangabeeinheiten 3b und 3c sind jedoch bereit in eine aktive Grandmasterrolle überzugehen.

In Figur 1 ist ferner dargestellt, dass die Schutzgeräte 2 einen Strom von Datentelegrammen oder mit anderen Worten Datenstrom 7 erhalten. Jeder Datenstrom 7 wird von den MUs 4 ausgangsseitig bereitgestellt. Die MUs 4 empfangen eingangsseitig Messwerte von Strom- oder Spannungsmessgeräten, die einen Strom oder die Spannung eines Hochspannungsleiters oder einer Komponente in einem Elektroenergieversorgungsnetz erfassen. Dazu sind die MUs mit den Strom- oder Spannungsmessgeräten verbunden. Diese Strom- oder Spannungsmessgeräte sind aus Gründen der Übersicht figürlich nicht dargestellt. Sind die Messwerte am Eingang der MUs analog, tastet jede MU die analogen Signale unter Gewinnung von Abtastwerten ab. Die Abtastwerte werden mittels eines Analog-Digital-Wandlers unter Erhalt von digitalen Messwerten digitalisiert. Zur Erzeugung von Datentelegrammen werden die digitalen Messwerte mit einem Zeitstempel tₓ versehen, wobei x als Index eine fortlaufende ganze Zahl darstellt. Um die digitalen Messwerte der MU 4a mit denen der MU 4b oder 4c vergleichen zu können müssen die MUs mit einander synchronisiert sein. Dies erfolgt über PTP-Synchronisationsnachrichten.

Bei einem Ausfall der Grandmaster-Zeitangabeeinheit 3a geht die Grandmasterrolle z.B. auf die Zeitangabeeinheit 3c über. Dies wird vom BMCA bestimmt. Da die Zeitangabeeinheit 3c mit der Zeitangabeeinheit 3a synchronisiert war, kommt es zu keinem Verlust der Synchronisation. Ist die Zeitangabeeinheit 3a wieder funktionstüchtig oder wieder an das Netzwerk 1 angeschlossen, unterdrückt ein zuvor implementierter Algorithmus die unmittelbare Übernahme der Grandmasterrolle durch die Zeiteingabeeinheit 3a. Die Zeiteingabeeinheit verbleibt im Slave-Zustand und synchronisiert sich mit der Grandmaster-Zeitangabeeinheit 3c. Ist die Synchronisation erreicht, wird das Erzwingen des Slave-Zustandes durch den besagten Algorithmus wieder aufgehoben. Der BMCA bestimmt anschließend über das Schicksal der Zeitangabeeinheit 3a.

Ist die Zeitangabeeinheit 3a ausgefallen oder wird sie vom Netz getrennt ist, wird ihr Fehlen auf Grund der ausbleibenden PTP-Announce-Nachrichten seitens der Zeitangabeeinheit 3a von den Zeitangabeeinheit 3b und 3c erkannt. Gemäß dem BMCA wechselt z.B. die Zeitangabeeinheit 3c in die Grandmaster-Rolle. Hat die Zeitangabeeinheit 3c den Wechsel erkannt, sendet sie unmittelbar oder mit anderen Worten sofort eine Vorsynchronisationsmeldung an die Schutzgeräte 2 mit dem sinngemäßen Inhalt, dass sie vor ihrem Wechsel in die Grandmasterrolle mit der Zeitangabeeinheit 3a synchronisiert war.

Die IEDs 2, 4 erkennen den Wechsel des Grandmasters von der Zeitangabeeinheit 3a zur Zeitangabeeinheit 3c aufgrund der PTP-Nachrichten. Dabei wird die Zeitsynchronisation der IEDs nicht gestört, wenn der interne Oszillator der Zeitangabeeinheit 3c vor der Umschaltung mit dem Oszillator der Zeitangabeeinheit 3a synchronisiert war. Die Synchronisierung der Zeiterfassung unter den IEDs wird reibungslos fortgesetzt. Es gibt keinen Zeitsprung während oder nach der Grandmaster-Umschaltung.

Die IEDs 2, 4 erkennen nach der Übernahme keinen Zeitsprung und müssen ihren internen Oszillator nicht mit dem neuen lokalen Oszillator der neuen Grandmaster-Zeitangabeeinheit 3c synchronisieren. Ein solcher Re-Synchronisationsprozess kann bis zu 20 Sekunden dauern. In dieser Zeit würden die Schutzgeräte 2 ihre Schutzfunktionen blockieren, um eine mögliche Fehlauslösung von Leistungsschaltern zur verhindern.

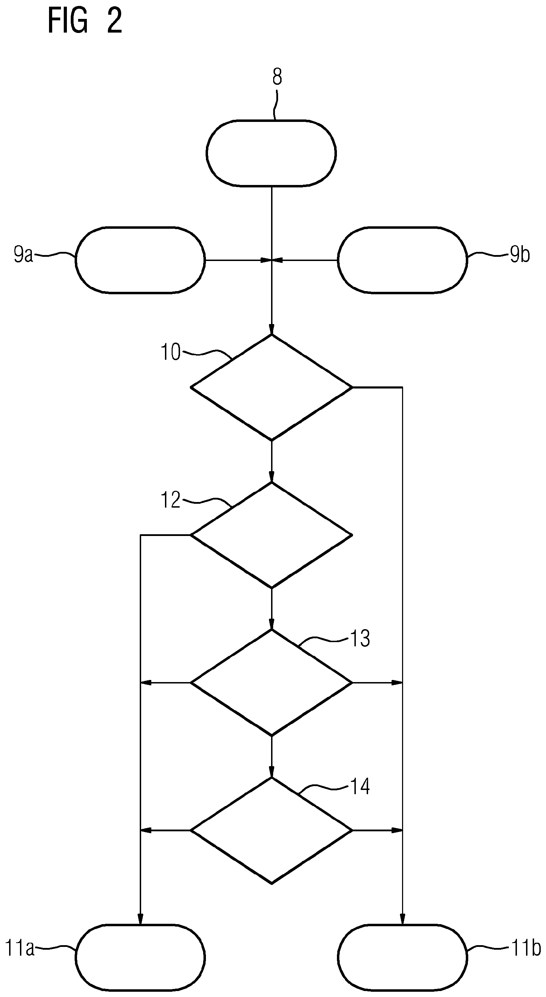

Figur 2 verdeutlicht das Ablaufdiagramm eines Ausführungsbeispiels des erfindungsgemäßen Verfahrens. Das gezeigte Verfahren läuft in den in Figur 1 gezeigten Schutzgeräten 2 ab. Die Schutzgeräte 2 vergleichen jeweils alle bei ihnen eingehenden Datenströme. Dazu werden zu einem bestimmten Zeitpunkt durch das erfindungsgemäße Verfahren immer zwei Datenströme, die von unterschiedlichen MUs stammen können, miteinander verglichen. Diese Vorgehensweise wird so oft wiederholt, bis alle bei dem jeweiligen Schutzgerät eingehenden Datenströme miteinander verglichen sind. In Figur 2 sind daher zwei Datenströme 9a und 9b gezeigt, die von den MUs 4a und 4b stammen. Das Verfahren läuft ab, um zu entscheiden, ob die MUs 4a und 4b miteinander synchronisiert sind. Ist dies der Fall, so wird die Schutzfunktion der Schutzgeräte 2 weiter ausgeführt, andernfalls müsste diese blockiert werden.

Die Schutzgeräte 2 empfangen die Vorsynchronisationsmeldung 8 sowie zwei Datenströme 9a und 9b von den MUs 4a bzw. 4b. Gemäß der Norm IEC 61850-9-2 enthalten die Datentelegramme der Datenströme 9a und 9b Informationen über die Synchronisations-Zeitquelle (global, lokal oder IED-intern) und die Identität der Grandmaster-Zeiteinheit. Diese Informationen werden durch die Attribute "smpSynch" und "gmIdentity" übermittelt. Vorsynchronisationsmeldung 8 enthält die Angabe, ob die aktuelle Grandmaster-Zeitangabeeinheit vor dem Grandmaster-Rollenwechsel erfolgreich mit der vorherigen Grandmaster-Zeitangabeeinheit synchronisiert war. Ferner umfasst die Vorsynchronisationsmeldung die Identität der aktuellen Grandmaster-Zeitangabeeinheit und die Identität der vorherigen Grandmaster-Zeitangabeeinheit.

Im ersten Schritt 10 wird geprüft, ob die MUs 4a und 4b global oder lokal synchronisiert sind. Wäre eine MU global und die andere lokal oder zumindest eine MU IED intern synchronisiert, dann würden die MUs 4a und 4b unterschiedliche Zeitbasen verwenden. Sie wären somit nicht miteinander synchronisiert. Dies entspräche dem Ergebnis 11b "nicht synchronisiert". Das Ergebnis 11a dieses Prüfungsverfahrens ist "synchronisiert" mit anderen Worten sind die Datenströme der beiden MUs 4a und 4b miteinander synchronisiert. Um eine bestehende Synchronisation bestätigen zu könne, müssen jedoch noch weitere Prüfungsschritte durchgeführt werden.

Im Prüfungsschritt 12 wird festgestellt, ob die MUs 4a und 4b beide global synchronisiert sind. Ist dies der Fall, verwenden die MUs dieselbe globale Zeitbasis, die Prüfung ist mit dem Ergebnis 11a "Synchronisiert" beendet. Sind beide Datenströme nicht beide global synchronisiert, so müssen diese in Zusammenschau mit dem Ergebnis des Prüfungsschritts 10 beide lokal synchronisiert sein.

Im Prüfungsschritt 13 wird geprüft, ob die MUs 4a und 4b mit derselben PTP-Grandmaster-Clock synchronisiert sind. Ist dies der Fall, verwenden die MUs dieselbe Zeitbasis und sind miteinander synchronisiert. Das Ergebnis der Prüfung ist 11a "synchronisiert". Wird jedoch festgestellt, dass die MUs 4a und 4b mit unterschiedlichen Grandmaster-Zeitangabeeinheiten synchronisiert sind, muss ein weiterer letzter Prüfschritt erfolgen.

Im vierten Prüfungsschritt 14 wird geprüft, ob es sich bei diesen unterschiedlichen Grandmaster-Zeitangabeeinheiten um die aktuelle und die vorherige Grandmaster-Zeitangabeeinheit handelt. Wenn dem so ist und die Vorsynchronisation erfolgreich war, verwenden beide die gleiche Zeitbasis. Die MUs 4a und 4b sind in diesem Falle miteinander synchronisiert. Prüfungsschritt 14 erfolgt mit Hilfe von Vorsynchronisationsmeldung 8. Die beiden MUs 4a und 4b sind miteinander synchronisiert, wenn die aktuelle Grandmaster-Zeitangabeeinheit beispielsweise 3c vor dem Wechsel der Grandmasterrolle mit der vorherigen Grandmaster-Zeitangabeeinheit 3a synchronisiert war (Vorsynchronisation) und die beiden MUs 4a und 4b entweder mit der aktuellen oder der vorhergehenden Grandmaster-Zeitangabeeinheit synchronisiert sind. Das Ergebnis ist dann 11a "synchronisiert" andernfalls 11b "nicht synchronisiert".

Durch den Prüfungsschritt 14 kann also eine Blockade der Schutzfunktion des jeweiligen Schutzgeräts, die gemäß vorbekannter Verfahren erfolgt wäre, sicher vermieden werden.

## Patentansprüche

1. Verfahren zum Vermeiden von Funktionsblockaden intelligenter elektronischer Einheiten IEDs (2,4), die als Teil eines lokalen Netzwerks (1) und über das lokal begrenzte Netzwerks (1) miteinander verbunden sind, wobei das lokal begrenzte Netzwerk (1) wenigstens zwei Zeitangabeeinheiten (3) aufweist, bei dem
- eine der Zeitangabeeinheiten (3a) als Synchronisationsquelle eine aktive Grandmaster-Rolle einnimmt und alle anderen Zeitangabeeinheiten (3b, 3c) in ihrem Slave-Zustand verbleiben und sich mit der Zeitangabeeinheit (3a) in der Grandmaster-Rolle synchronisieren,
- wobei, wenn eine der Zeitangabeeinheiten (3b, 3c) im Slave-Zustand in die Rolle der Grandmaster-Zeitangabeeinheit wechselt, allen IEDs (2, 4) in dem lokalen Netzwerk (1) über das Netzwerk (1) über eine Vorsynchronisationsmeldung (8) mitgeteilt wird, ob und gegebenenfalls mit welcher vorherigen Grandmaster-Zeitangabeeinheit (3a) die aktuelle Grandmaster-Zeitangabeeinheit (3c) synchronisiert war.

2. Verfahren nach Anspruch 1,
**dadurch gekennzeichnet, dass**
die Vorsynchronisationsmeldung (8) eine binäre Vorsynchronisationsmeldung ist.

3. Verfahren nach Anspruch 1 oder 2,
**dadurch gekennzeichnet, dass**
Vorsynchronisationsmeldung (8) von einer Grandmasterzeiteinheit (3) oder einer IED (2, 4) gesendet wird.

4. Verfahren nach einem der vorherigen Ansprüche,
**dadurch gekennzeichnet, dass**
die Vorsynchronisationsmeldung (8) die Identität der aktuellen Grandmaster-Zeitangabeeinheit (3c), die Identität der vorherigen Grandmaster-Zeitangabeeinheit (3a) und eine Angabe umfasst, aus der hervorgeht, ob die aktuelle Grandmaster-Zeitangabeeinheit und die vorherige Grandmaster-Zeitangabeeinheit miteinander synchronisiert waren.

5. Verfahren nach einem der Ansprüche 1 bis 3,
**dadurch gekennzeichnet, dass**
die Vorsynchronisationsmeldung (8) als GOOSE-Meldung gesendet wird.

6. Verfahren nach einem der Ansprüche 1 bis 3,
**dadurch gekennzeichnet, dass**
Vorsynchronisationsmeldung (8) in Gestalt einer, Precision Time Protocol, PTP-Nachricht versendet wird und ein Typ-Länge-Wert-Feld umfasst.

7. Verfahren nach einem der vorhergehenden Ansprüche,
**dadurch gekennzeichnet, dass**
die Vorsynchronisationsmeldung (8) von einer Grandmaster-Zeitangabeeinheit (3c) versendet wird, wenn diese die Grandmasterrolle übernimmt, wobei die Grandmaster-Zeitangabeeinheit (3c) als separate Einheit in das lokale Netzwerk (1) eingebunden ist.

8. Verfahren nach einem der vorhergehenden Ansprüche,
**dadurch gekennzeichnet, dass**
die aktuelle Grandmaster-Zeiteinheit (3c) ein Funktionsblock ist, der in einer IED (2, 4) integriert ist.

9. Verfahren nach einem der vorangehenden Ansprüche,
**dadurch gekennzeichnet, dass**
die IEDs (2, 4) mehrere Merging Units, MUs, (3) und wenigstens ein Schutzgerät (2) umfassen.

10. Verfahren nach einem der vorhergehenden Ansprüche,
**dadurch gekennzeichnet, dass**
- eine erste Zeitangabeeinheit (2) in ihren Slave-Zustand gezwungen wird, wenn eine andere Zeitangabeeinheit in der Grandmaster-Rolle in dem lokal begrenzten Netzwerk (1) erkannt wurde, wobei sich die erste Zeiteinheit (2) mit der Zeitangabeeinheit (3) in der Grandmaster-Rolle synchronisiert,
- nach erfolgter Synchronisation das Erzwingen des Slave-Zustandes bei der ersten Zeitangabeeinheit (2) aufgehoben wird,
- die erste Zeitangabeeinheit (2) in die Rolle der Grandmaster-Zeitangabeeinheit wechselt, wenn diese sich besser für die Grandmaster-Rolle eignet, oder in ihrem Slave-Zustand verbleibt, wenn eine andere Zeitangabeeinheit (3) in dem Netzwerk (1) sich besser für die Grandmaster-Rolle eignet.

11. Verfahren nach einem der vorhergehenden Ansprüche,
**dadurch gekennzeichnet, dass**
eine wieder verfügbare oder wieder mit dem Netzwerk verbundene grandmasterfähige Zeitangabeeinheit im Slave-Zustand verbleibt und sich fortlaufend mit der aktuellen Grandmaster-Zeitangabeeinheit synchronisiert und erst bei Wegfall der Grandmaster-Zeitangabeeinheit in die Grandmaster-Rolle wechselt.

12. Anordnung zum Vermeiden von Funktionsblockaden intelligenter elektronischer Einheiten, IEDs, (2,4) mit
- einem lokalen begrenzten Netzwerk (1), das die IEDs (2, 4) und wenigstens zwei Zeitangabeeinheiten (3) sowie ein Kommunikationsnetz (6) aufweist, über das die IEDs und die Zeitangabeeinheiten miteinander verbunden sind, wobei
- die Zeitangabeeinheiten (3) dazu eingerichtet sind, dass sie eine Grandmasterrolle, in der sie als Synchronisationsquelle für die IEDs (2, 4) dienen, oder einen Slave-Zustand annehmen, in dem sie sich mit einer Zeitangabeeinheit (3a) in der Grandmaster-Rolle synchronisieren,
- wobei zumindest eine IED (2, 4) oder Zeiteinheit (3) so ausgestaltet ist, dass sie, wenn eine der Zeitangabeeinheiten (3b, 3c) im Slave-Zustand in die Rolle der Grandmaster-Zeitangabeeinheit wechselt, allen IEDs (2, 4) in dem lokalen Netzwerk (1) über das Kommunikationsnetz (6) mit Hilfe einer Vorsynchronisationsmeldung (8) mitgeteilt, ob die aktuelle Grandmaster-Zeitangabeeinheit (3c) mit der vorherigen Grandmaster-Zeitangabeeinheit synchronisiert war.

13. Computerprogrammprodukt, umfassend Befehle, die bei der Ausführung des Programms durch einen Computer diesen veranlassen, ein Verfahren nach einem der Ansprüche 1 bis 11 auszuführen.

## Claims

1. Method for avoiding functional blockages of intelligent electronic units IEDs (2,4) which are connected to each other as part of a local area network (1) and via the locally limited network (1), wherein the locally limited network (1) has at least two timing units (3), in which
- one of the timing units (3a) as the synchronization source assumes an active grandmaster role and all other timing units (3b, 3c) remain in their slave state and synchronize with the timing unit (3a) in the grandmaster role,
- wherein, when one of the timing units (3b, 3c) in the slave state changes to the role of the grandmaster timing unit, all IEDs (2, 4) in the local area network (1) are informed via the network (1) via a pre-synchronization message (8) whether and, if necessary, with which previous grandmaster timing unit (3a) the current grandmaster timing unit (3c) was synchronized.

2. Method according to Claim 1,
**characterized in that**
the pre-synchronization message (8) is a binary pre-synchronization message.

3. Method according to Claim 1 or 2,
**characterized in that**
the pre-synchronization message (8) is sent by a grandmaster time unit (3) or an IED (2, 4).

4. Method according to one of the preceding claims,
**characterized in that**
the pre-synchronization message (8) includes the identity of the current grandmaster timing unit (3c), the identity of the previous grandmaster timing unit (3a), and an indication indicating whether the current grandmaster timing unit and the previous grandmaster timing unit were synchronized with each other.

5. Method according to one of Claims 1 to 3,
**characterized in that**
the pre-synchronization message (8) is sent as a GOOSE message.

6. Method according to one of Claims 1 to 3,
**characterized in that**
the pre-synchronization message (8) is sent in the form of a Precision Time Protocol, PTP, message and includes a type-length-value field.

7. Method according to one of the preceding claims,
**characterized in that**
the pre-synchronization message (8) is sent by a grandmaster timing unit (3c) when it assumes the grandmaster role, wherein the grandmaster timing unit (3c) is incorporated as a separate unit into the local area network (1).

8. Method according to one of the preceding claims,
**characterized in that**
the current grandmaster time unit (3c) is a function block integrated in an IED (2, 4).

9. Method according to one of the preceding claims,
**characterized in that**
the IEDs (2, 4) comprise a plurality of merging units, MUs, (3) and at least one protective device (2).

10. Method according to one of the preceding claims,
**characterized in that**
- a first timing unit (2) is forced into its slave state when another timing unit in the grandmaster role has been detected in the locally limited network (1), wherein the first time unit (2) synchronizes with the timing unit (3) in the grandmaster role,
- after synchronization has been completed, the forcing of the slave state is cancelled for the first timing unit (2),
- the first timing unit (2) changes to the role of the grandmaster timing unit if it is better suited to the grandmaster role, or remains in its slave state if another timing unit (3) in the network (1) is better suited to the grandmaster role.

11. Method according to one of the preceding claims,
**characterized in that**
a timing unit with grandmaster capability that is available again or is connected to the network again remains in the slave state and synchronizes continuously with the current grandmaster timing unit and only changes to the grandmaster role when the grandmaster timing unit is no longer used.

12. Arrangement for avoiding functional blockages of intelligent electronic units, IEDs, (2,4) having
- a local limited network (1) comprising the IEDs (2, 4) and at least two timing units (3) and a communication network (6), via which the IEDs and the timing units are connected to each other, wherein
- the timing units (3) are configured to assume a grandmaster role, in which they serve as a synchronization source for the IEDs (2, 4), or a slave state, in which they synchronize with a timing unit (3a) in the grandmaster role,
- wherein at least one IED (2, 4) or time unit (3) is designed such that, when one of the timing units (3b, 3c) in the slave state changes to the role of the grandmaster timing unit, all IEDs (2, 4) in the local area network (1) are informed via the communication network (6) by means of a pre-synchronization message (8) whether the current grandmaster timing unit (3c) was synchronized with the previous grandmaster timing unit.

13. Computer program product comprising instructions that, when the program is executed by a computer, cause said computer to carry out a method according to one of Claims 1 to 11.

## Revendications

1. Procédé pour prévenir des blocages de fonction d'unités électroniques intelligentes IEDs (2, 4), qui font partie d'un réseau (1) local et sont raccordées entre elles par le réseau (1) délimité localement, dans lequel le réseau (1) délimité localement a au moins deux unités (3) d'indication de temps, dans lequel
- l'une des unités (3a) d'indication de temps assume, comme source de synchronisation, un rôle actif de grand maître et toutes les autres unités (3b, 3c) d'indication de temps restent dans leur état d'esclave et se synchronisent avec l'unité (3a) d'indication de temps dans le rôle de grand maître,
- dans lequel, si l'une des unités (3b, 3c) d'indication de temps dans l'état d'esclave passe dans le rôle de l'unité d'indication de temps de grand maître, on fait part à toutes les IEDs (2, 4) dans le réseau (1) local par le réseau (1), d'un message (8) de présynchronisation sur le point de savoir, et le cas échéant, avec quelle unité (3a) précédente d'indication de temps de grand maître, l'unité (3c) d'indication de temps présente de grand maître était synchronisée.

2. Procédé suivant la revendication 1,
**caractérisé en ce que**
le message (8) de présynchronisation est un message de présynchronisation binaire.

3. Procédé suivant la revendication 1 ou 2,
**caractérisé en ce que** l'
on envoie le message (8) de présynchronisation par une unité (3) d'indication de temps de grand maître ou par une IED (2, 4).

4. Procédé suivant l'une des revendications précédentes,
**caractérisé en ce que**
le message (8) de présynchronisation comprend l'identité de l'unité (3c) en cours d'indication de temps de grand maître, l'identité de l'unité (3a) précédente d'indication de temps de grand maître et une indication sur le point de savoir, si l'unité en cours d'indication de temps de grand maître et l'unité précédente d'indication de temps de grand maître étaient synchronisées entre elles.

5. Procédé suivant l'une des revendications 1 à 3,
**caractérisé en ce que** l'
on envoie le message (8) de présynchronisation sous la forme d'un message GOOSE.

6. Procédé suivant l'une des revendications 1 à 3,
**caractérisé en ce que** l'
on envoie le message (8) de présynchronisation sous la forme d'un avis Precision Time Protocol, PTP, et il comprend un champ de valeur de type long.

7. Procédé suivant l'une des revendications précédentes,
**caractérisé en ce que** l'
on envoie le message (8) de présynchronisation par une unité (3c) d'indication de temps de grand maître, si celle-ci assume le rôle de grand maître, dans lequel l'unité (3c) d'indication de temps de grand maître est rattachée en tant qu'unité distincte au réseau (1) local.

8. Procédé suivant l'une des revendications précédentes,
**caractérisé en ce que**
l'unité (3c) en cours d'indication de temps de grand maître est un bloc fonctionnel, qui est intégré dans une IED (2, 4).

9. Procédé suivant l'une des revendications précédentes,
**caractérisé en ce que**
les IEDs (2, 4) comprennent plusieurs Merging Units, MUs, (3) et au moins un appareil (2) de protection.

10. Procédé suivant l'une des revendications précédentes,
**caractérisé en ce que**
- l'on oblige une première unité (2) d'indication de temps à être dans son état d'esclave, si une autre unité d'indication de temps a été identifiée dans le rôle de grand maître dans le réseau (1) délimité localement, dans lequel la première unité (2) d'indication de temps est synchronisée à l'unité (3) d'indication de temps dans le rôle de grand maître,
- après la synchronisation effectuée, on lève l'obligation de l'état d'esclave auprès de la première unité (2) d'indication de temps,
- la première unité (2) d'indication de temps passe dans le rôle d'unité d'indication de temps de grand maître, si celle-ci convient mieux pour le rôle de grand maître ou reste dans son état d'esclave, si une autre unité (3) d'indication de temps dans le réseau (1) convient mieux pour le rôle de grand maître.

11. Procédé suivant l'une des revendications précédentes,
**caractérisé en ce qu'**
une unité d'indication de temps apte à être grand maître, disponible ou raccordée à nouveau au réseau, reste dans l'état d'esclave et se synchronise en continu avec l'unité en cours d'indication de temps de grand maître et ne prend le rôle de grand maître qu'à la suppression de l'unité d'indication de temps de grand maître.

12. Agencement de prévention de blocages de fonction d'unités électroniques intelligentes, IEDs, (2, 4) comprenant
- un réseau (1) délimité localement, qui a les IEDs (2, 4) et au moins deux unités (3) d'indication de temps, ainsi qu'un réseau (6) de communication, par lequel les IEDs et les unités d'indication de temps sont raccordées entre elles, dans lequel
- les unités (3) d'indication de temps sont agencées de manière à assumer un rôle de grand maître, dans lequel elles servent de source de synchronisation pour les IEDs (2, 4), ou un état d'esclave, dans lequel elles se synchronisent avec une unité (3a) d'indication de temps dans le rôle de grand maître,
- dans lequel au moins une IED (2, 4) ou une unité (3) d'indication de temps est conformée, de manière à ce que, si l'une des unités (3b, 3c) d'indication de temps dans l'état d'esclave assume le rôle d'indication de temps de grand maître, il soit fait part à toutes les IEDs (2, 4) dans le réseau (1) local par le réseau (6) de communication, à l'aide d'un message (8) de présynchronisation, que l'unité (3c) présente d'indication de temps de grand maître était synchronisée avec l'unité précédente d'indication de temps de grand maître.

13. Produit de programme d'ordinateur, comprenant des instructions, qui lors de l'exécution du programme par ordinateur, font que celui-ci exécute un procédé suivant l'une des revendications 1 à 11.
